# EUROPÄISCHE PATENTSCHRIFT

(11) **EP 3 254 873 B1**
(45) Veröffentlichungstag und Bekanntmachung des Hinweises auf die Patenterteilung: **03.04.2019**
(21) Anmeldenummer: 17174712.4
(22) Anmeldetag: 07.06.2017
(51) Int. Cl.: B60C 23/04, B60J 3/00, B62J 3/00, B62J 99/00

(54) **VORRICHTUNG FÜR DAS MESSEN DES DRUCKS EINES ZWEIRADREIFENS SOWIE VERFAHREN ZUR KONTROLLE DES DRUCKS EINES ZWEIRADREIFENS**
DEVICE FOR MEASURING THE PRESSURE OF A BICYCLE TYRE AND METHOD OF CONTROLLING THE PRESSURE OF A BICYCLE TYRE
PROCÉDÉ DE MESURE DE LA PRESSION DANS UNE ROUE DE DEUX-ROUES ET PROCÉDÉ DE CONTRÔLE DE LA PRESSION D'UN PNEU DE DEUX-ROUES

(30) Priorität: 07.06.2016 DE 102016110507; 28.06.2016 DE 102016111851
(43) Veröffentlichungstag der Anmeldung: 13.12.2017
(73) Patentinhaber: SKS metaplast Scheffer-Klute GmbH, 59846 Sundern (DE)
(72) Erfinder: Kordes, Sven, 59846 Sundern (DE); Grabski, Karsten, 59469 Ense (DE)
(74) Vertreter: Basfeld, Rainer

(56) Entgegenhaltungen:
- WO-A1-2013/013325
- DE-U1-202014 105 743
- US-A1- 2010 083 767
- US-A1- 2015 314 656

## Beschreibung

Die vorliegende Erfindung betrifft ein Verfahren zur Kontrolle des Drucks eines Zweiradreifens, insbesondere eines Fahrradreifens, wie aus der Patentschrift US 2015/0314656 A1 gemäß dem Oberbegriff des Anspruchs 1.

Unter Fahrrädern sollen sowohl Fahrräder ohne Elektromotor als auch E-Bikes verstanden werden.

Es ist bekannt, den Istdruck eines Zweiradreifens beispielsweise bei dem Aufpumpen durch ein in die Luftpumpe integriertes Manometer zu erfassen.

Weiterhin ist beispielsweise aus der DE 20 2014 105743 U1 ein Luftdrucksensor für einen Fahrradreifen bekannt, der auf alle gängigen Ventile aufgeschraubt werden kann und mittels einer Funkübertragung, insbesondere per Bluetooth Standard, den Istdruck des Reifens an ein Ausgabegerät übermittelt.

In einigen wenigen Fällen ist dem Benutzer ein Standard-Solldruck der an seinem Zweirad verbauten Reifen bekannt. Er kann dann beispielsweise mit der mit einem Manometer ausgestatteten Luftpumpe den Reifen aufpumpen, bis der Standard-Solldruck erreicht ist. Häufig kennt der Benutzer jedoch nicht den Standard-Solldruck der an seinem Zweirad verbauten Reifen. Weiterhin ist er nicht in der Lage, den Einfluss seines Gewichts, des Gewicht des Zweirads und zusätzlich zu transportierender Lasten sowie den Einfluss des Streckenprofils der zu bewältigenden Strecke auf den Solldruck zu berücksichtigen.

Aus der US 2015/0314656 A1 ist ein Verfahren der eingangs genannten Art bekannt. Bei dem darin beschriebenen Verfahren wird ein Fahrradreifen mit einer Einheit verbunden, die einen Luftdrucksensor und drahtlose Übertragungsmittel für den gemessenen Istdruck aufweist. Weiterhin umfasst die Einheit eine Gaskartusche zum Befüllen des Reifens und Mittel zum Ablassen von Luft aus dem Reifen. Weiterhin ist ein Benutzerinterface vorgesehen, auf dem der Benutzer den Istdruck ablesen und einen Solldruck vorgeben kann. In Abhängigkeit von dem vorgegebenen Solldruck und dem gemessenen Istdruck kann die Einheit durch Ablassen von Luft oder Aufpumpen des Reifens den Istdruck an den Solldruck angleichen.

Das der vorliegenden Erfindung zugrunde liegende Problem ist die Angabe eines Verfahrens der eingangs genannten Art, mit dem ein Benutzer den Druck eines Zweiradreifens effektiver kontrollieren kann. Weiterhin sollen eine Rechenvorrichtung, auf dem das Verfahren durchgeführt werden kann, sowie ein Computerprogramm angegeben werden, das eine Rechenvorrichtung dazu veranlassen kann, das Verfahren durchzuführen.

Dies wird erfindungsgemäß durch ein Verfahren mit den kennzeichnenden Merkmalen des Anspruchs 1, eine Rechenvorrichtung mit den Merkmalen des Anspruchs 6 sowie ein Computerprogramm mit den Merkmalen des Anspruchs 7 erreicht. Die Unteransprüche betreffen bevorzugte Ausgestaltungen der Erfindung.

Gemäß Anspruch 1 ist vorgesehen, dass aus einer Datenbank Informationen entnommen werden, die dem Solldruck entsprechen oder eine Ermittlung des Solldrucks ermöglichen, und/oder dass von dem Benutzer zur Verfügung gestellte Informationen für die Ermittlung des Solldrucks verwendet werden, wobei die von dem Benutzer zur Verfügung gestellten Informationen das Gewicht des Fahrers und/oder das Gewicht zusätzlicher Lasten und/oder das Streckenprofil der zu bewältigenden Strecke und/oder das Zweirad und/oder den Zweiradreifen betreffen

Durch die Anzeige oder Signalisierung des Istdrucks und/oder des Solldrucks und/oder der Differenz zwischen Solldruck und Istdruck kann der Benutzer sowohl zu Beginn einer Fahrt, beispielsweise während des Aufpumpens der Zweiradreifen, als auch während der Fahrt auf Abweichungen des Istdrucks von einem Solldruck hingewiesen werden. Weiterhin kann durch die Ermittlung des Sollwerts ein situationsspezifischer Solldruck verwendet werden, der unter Umständen zu einer effektiveren Druckkontrolle des Zweiradreifens führt als ein vom Hersteller des Zweiradreifens angegebener Standard-Solldruck.

Es besteht die Möglichkeit, dass das Verfahren als Computerprogramm, insbesondere als Anwendungssoftware (App), auf einem mobilen Endgerät wie einem Smartphone oder einem Tabletcomputer durchgeführt werden kann.

Es kann vorgesehen sein, aus einer Datenbank Informationen entnommen werden, die dem Solldruck entsprechen oder eine Ermittlung des Solldrucks ermöglichen. Eine derartige Datenbank könnte auf einem von dem Benutzer verwendeten mobilen Endgerät gespeichert sein. Eine derartige Datenbank könnte aber auch auf einer über das Internet zugänglichen Rechenvorrichtung gespeichert sein, wobei eine auf dem mobilen Endgerät betriebene Anwendungssoftware über das Internet Daten aus der Datenbank auslesen kann. In einer derartigen Datenbank können Informationen über Standard-Solldrücke einer Vielzahl unterschiedlicher Zweiradreifen abgelegt sein.

Es besteht die Möglichkeit, dass von dem Benutzer zur Verfügung gestellte Informationen für die Ermittlung des Solldrucks verwendet werden. Dabei können die von dem Benutzer zur Verfügung gestellten Informationen das Gewicht des Fahrers und/oder das Gewicht zusätzlicher Lasten und/oder das Streckenprofil der zu bewältigenden Strecke und/oder das Zweirad und/oder den Zweiradreifen betreffen. Auf diese Weise kann ein an die konkrete Situation angepasster Solldruck ermittelt werden.

Es kann dabei vorgesehen sein, dass der Benutzer dazu aufgefordert wird, die Informationen zur Verfügung zu stellen. Auf diese Weise kann beispielsweise bei dem Starten der Anwendungssoftware auf dem mobilen Endgerät der Benutzer aufgefordert werden, fehlende Angaben zu machen, die für die Berechnung eines Solldrucks benötigt werden.

Der Solldruck kann aus den von dem Benutzer zur Verfügung gestellten Informationen und/oder den aus der Datenbank entnommenen Information ermittelt, insbesondere berechnet werden.

Es besteht die Möglichkeit, dass der Istdruck von Sensormitteln ermittelt wird, die insbesondere mit dem Ventil des Zweiradreifens oder mit einer Pumpe zum Aufpumpen des Zweiradreifens verbunden sind oder in das Ventil des Zweiradreifens oder in die Pumpe zum Aufpumpen des Zweiradreifens integriert sind, wobei vorzugsweise eine Vorrichtung für das Messen des Drucks eines Zweiradreifens, insbesondere eines Fahrradreifens, verwendet wird, die Verbindungsmittel für die Verbindung der Vorrichtung mit dem Ventil des Zweiradreifens, Mittel zum Öffnen des Ventils, so dass im mit dem Ventil verbundenen Zustand aus dem Zweiradreifen durch das Ventil unter Druck stehende Luft in die Vorrichtung hineinströmt, bis der Druck in der Vorrichtung dem Druck in dem Zweiradreifen entspricht, Druckmessmittel für die Messung des Drucks in der Vorrichtung, sowie Übertragungsmittel für die drahtlose Übertragung der dem gemessenen Druck entsprechenden Information umfasst. Beispielsweise können die Sensormittel drahtlos, insbesondere gemäß einem Bluetooth-Standard, mit dem mobilen Endgerät verbunden sein, so dass an die Anwendungssoftware der Istdruck übermittelt wird.

Es kann vorgesehen sein, dass der Istdruck und/oder der Solldruck auf einem Display, beispielsweise auf dem Display eines mobilen Endgeräts wie eines Smartphones oder eines Tabletcomputers, angezeigt werden. Es besteht auch die Möglichkeit, dass die Differenz zwischen Solldruck und Istdruck angezeigt wird.

Es besteht weiterhin die Möglichkeit, dass während eines Aufpumpvorgangs der Solldruck und/oder der Istdruck und/oder die Differenz zwischen Solldruck und Istdruck des Reifens angezeigt oder signalisiert werden. Der Benutzer wird auf diese Weise in die Lage versetzt, den Reifen aufzupumpen, bis der Solldruck erreicht ist.

Alternativ oder zusätzlich kann vorgesehen sein, dass während einer Fahrt der Solldruck und/oder der Istdruck und/oder die Differenz zwischen Solldruck und Istdruck des Reifens angezeigt oder signalisiert werden. Insbesondere kann der Benutzer bei einem signifikanten Druckabfall gewarnt werden, dass einer der Reifen platt zu werden droht.

Es besteht außerdem die Möglichkeit, dass der Istdruck in einem Zusatzbehälter erfasst wird, wobei der Istdruck in dem Zusatzbehälter angezeigt oder signalisiert werden kann. Dabei kann von dem Benutzer als Zusatzbehälter eine Druckluftkartusche mitgeführt werden, deren Druck im Rahmen des Verfahrens ermittelt und gegebenenfalls angezeigt werden kann.

Anspruch 6 sieht vor, dass die Rechenvorrichtung, insbesondere ein mobiles Endgerät wie ein Smartphone oder ein Tabletcomputer, dazu eingerichtet ist, ein erfindungsgemäßes Verfahren durchzuführen.

Anspruch 7 sieht vor, dass das Computerprogramm eine Rechenvorrichtung, insbesondere ein mobiles Endgerät wie ein Smartphone oder einen Tabletcomputer, veranlasst, die Schritte eines erfindungsgemäßen Verfahrens durchzuführen, wenn es auf der Rechenvorrichtung ausgeführt wird.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Seitenansicht einer Vorrichtung für das Messen des Drucks eines Zweiradreifens;
- Fig. 2: eine vergrößerte Schnittansicht gemäß den Pfeilen II - II in Fig. 1;
- Fig. 3: eine Seitenansicht eines Details eines Fahrradreifens mit der Vorrichtung gemäß Fig. 1 und einer Luftpumpe;
- Fig. 4: eine Schnittansicht durch den Fahrradreifen, die Vorrichtung und die Luftpumpe gemäß Fig. 4;
- Fig. 5: eine Detailansicht gemäß dem Pfeil V in Fig. 4.

In den Figuren sind gleiche oder funktional gleiche Teile mit gleichen Bezugszeichen versehen.

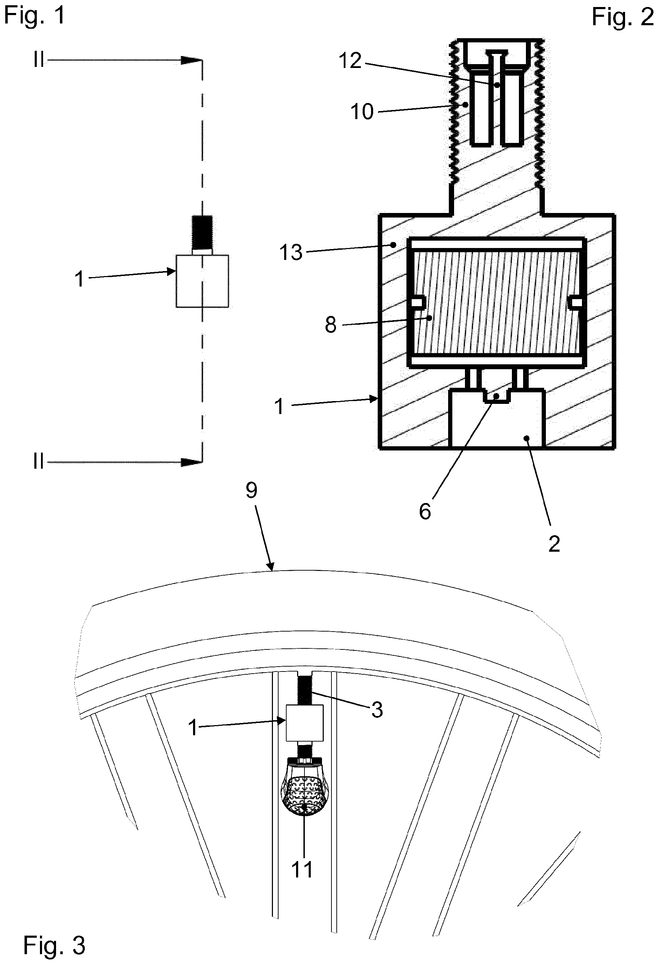

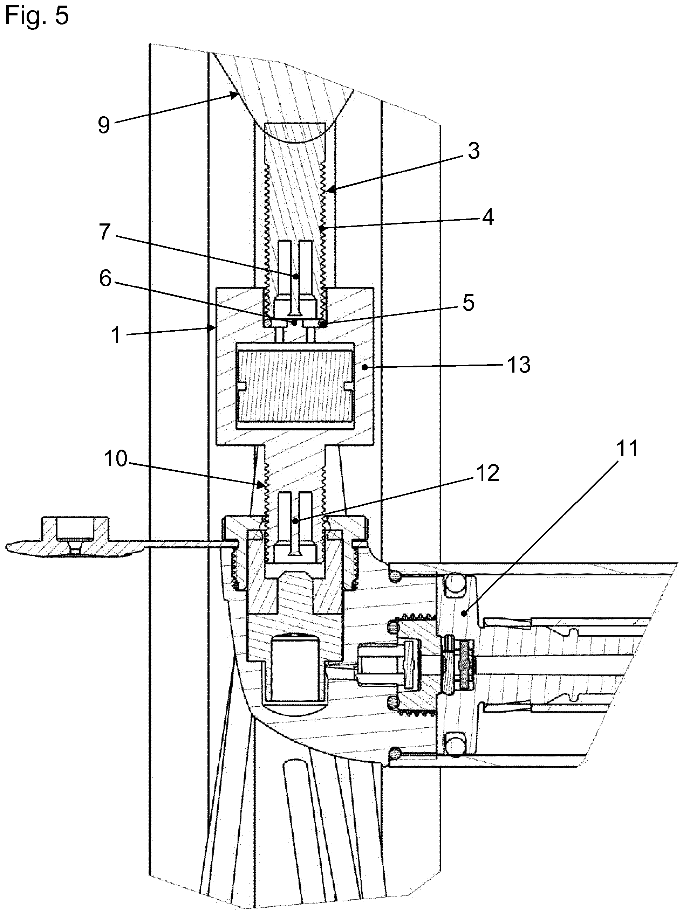

Die aus Fig. 1 und Fig. 2 ersichtliche Ausführungsform einer Vorrichtung 1 für das Messen des Drucks eines Zweiradreifens umfasst ein Gehäuse 13 mit einer Aussparung 2 an der in Fig. 2 unteren Seite. In der Aussparung 2 ist ein nicht abgebildetes Innengewinde vorgesehen, das auf das Außengewinde 4 eines Ventils 3 eines Fahrradreifens 9 (siehe Fig. 5) aufgeschraubt werden kann. Die Aussparung 2 mit Innengewinde dient als Verbindungsmittel für die Verbindung mit dem Ventil 3.

In der Aussparung 2 sind weiterhin Dichtmittel 5 in Form eines O-Rings vorgesehen, der stirnseitig an einem Ventil 3 anliegen können.

Weiterhin ist bei der abgebildeten Ausführungsform der Vorrichtung 1 in der Aussparung 2 ein Vorsprung 6 angeordnet, der einen Stift 7 eindrücken kann, der bei einem als Schraderventil ausgeführten Ventil 3 vorgesehen ist. Durch Eindrücken dieses Stiftes 7 öffnet sich das Ventil 3 in an sich bekannter Weise.

In Fig. 5 sind der Vorsprung 6 und der Stift 7 zur Verdeutlichung mit einem kleinen zwischen ihnen angedeuteten Abstand dargestellt. Aufgrund dieses Abstandes ist das Ventil 3 noch nicht geöffnet. Erst durch weiteres Aufschrauben des Innengewindes auf das Außengewinde 4 des Ventils 3 drückt der Vorsprung 6 den Stift 7 etwas in das Ventil 3 hinein, so dass dieses geöffnet wird. Der Vorsprung 6 dient somit, insbesondere zusammen mit dem Innengewinde der Aussparung 2 als Mittel zum Öffnen des Ventils 3.

Die abgebildete Ausführungsform der Vorrichtung 1 ist somit für das Zusammenwirken mit einem Schraderventil ausgestaltet. Es besteht durchaus auch die Möglichkeit, Ausführungsformen für andere typische Fahrradventile wie Sclaverandventile und Dunlopventile zu schaffen. Beispielsweise kann bei Sclaverandventilen ein vergleichbarer Vorsprung den bei dem Sclaverandventil ebenfalls vorgesehenen Stift zum Öffnen des Ventils eindrücken.

Die Vorrichtung 1 umfasst weiterhin etwa im mittleren Bereich des Gehäuses 13 eine lediglich schematisch dargestellte Einheit 8, die Druckmessmittel aufweist und mit der Aussparung 2 in Fluidverbindung steht. Damit können die Druckmessmittel den Druck in der Aussparung 2 messen. Dieser Druck in der Aussparung 2 entspricht nach Öffnen des Ventils 3 dem Druck in dem Fahrradreifen 9, so dass die Druckmessmittel nach entsprechender Verbindung der Vorrichtung 1 mit dem Ventil 3 den Druck in dem Fahrradreifen messen können.

Die Einheit 8 umfasst weiterhin Übertragungsmittel, die die dem gemessenen Druck entsprechende Information drahtlos übertragen können. Insbesondere handelt es sich um Funkübertragungsmittel die für eine Funkübertragung nach einem Bluetooth-Standard geeignet sind. Von den Übertragungsmitteln kann die Information über die Größe des Drucks beispielsweise an ein Smartphone oder einen Tabletcomputer übertragen werden. Auf diesem kann dann dem Benutzer der Druck angezeigt werden oder bei Abweichung von einem Sollwert beispielsweise optisch oder akustisch signalisiert werden, dass eine Abweichung vorliegt.

Es besteht durchaus die Möglichkeit, andere Übertragungsmittel vorzusehen, die einen anderen Übertragungsstandard verwenden.

Auf der der Ausnehmung 2 gegenüberliegenden Seite weist die Vorrichtung 1 Anschlussmittel 10 für eine Luftpumpe 11 auf. Die Anschlussmittel 10 ragen in Fig. 2 nach oben aus dem Gehäuse 13 heraus und sind wie ein Ventil eines Fahrrads gestaltet, im abgebildeten Ausführungsbeispiel insbesondere wie ein Schraderventil. Das bedeutet, dass im Inneren der Anschlussmittel 10 ein Stift 12 vorgesehen ist, durch dessen Eindrücken eine Fluidverbindung zu dem Innenraum der Luftpumpe 11 hergestellt werden kann.

Es besteht durchaus die Möglichkeit, die Anschlussmittel 10 so zu gestalten, dass sie wie ein Sclaverandventil oder ein Dunlopventil gestaltet sind.

Die Anschlussmittel 10 stehen mit der Aussparung 2 in Fluidverbindung, so dass mit der Luftpumpe 11 durch die Vorrichtung 1 und das damit verbundene Ventil 3 der Fahrradreifen 9 aufgepumpt werden kann (siehe dazu Fig. 5).

Ein bevorzugtes Ausführungsbeispiel des erfindungsgemäßen Verfahrens sieht vor, dass das Verfahren als Anwendungssoftware beziehungsweise App auf einem mobilen Endgerät wie einem Smartphone oder einem Tabletcomputer durchgeführt werden kann.

Für die Kontrolle des Reifendrucks kann eine Datenbank für Reifendrücke vorgesehen sein. Diese kann von der App auf dem mobilen Endgerät gespeichert werden. Es besteht aber auch die Möglichkeit, dass auf die Datenbank von dem mobilen Endgerät über das Internet zugegriffen werden kann. In der Datenbank können Reifendrücke möglichst sämtlicher bekannter Reifentypen hinterlegt sein.

Die App kann weiterhin so gestaltet sein, dass sie eine Abfrage durchführt und auf diese Weise von dem Benutzer Informationen über das Zweirad und die verbauten Reifen erlangt. Beispielsweise kann dabei geklärt werden, ob das Zweirad ein Fahrrad ohne Elektromotor oder ein E-Bike ist. Weitere Informationen können das Gewicht des Benutzers und das Gewicht eventuell mitgeführter Gepäckstücke betreffen. Weiterhin können Informationen über das Streckenprofil der zu bewältigenden Strecke abgefragt werden. Es kann auch in Erfahrung gebracht werden, ob eine Druckluftkartusche mitgeführt wird beziehungsweise welchen Füllstand diese aufweist. Auch das Vorhandensein einer Luftpumpe kann ermittelt werden.

Anhand der ermittelten Informationen berechnet die App unter Rückgriff auf die Datenbank einen Solldruck der Reifen und gibt diesen an. Der Benutzer kann dabei beispielsweise mittels einer Luftpumpe mit Manometer die Reifen aufpumpen bis der Istdruck dem Solldruck entspricht.

Anstelle einer Luftpumpe mit Manometer kann auf eine Luftpumpe mit integriertem Drucksensor verwendet werden. Es gibt Ausführungsformen derartiger Pumpen, die beispielsweise über eine drahtlose Verbindung gemäß einem Bluetooth-Standard mit dem mobilen Endgerät verbunden sind und so an die Anwendungssoftware den Istdruck übermitteln. Wenn bei dem Aufpumpen der Reifen der Istdruck den Solldruck erreicht, kann dies dann dem Benutzer von dem mobilen Endgerät signalisiert werden, beispielsweise akustisch oder optisch signalisiert werden.

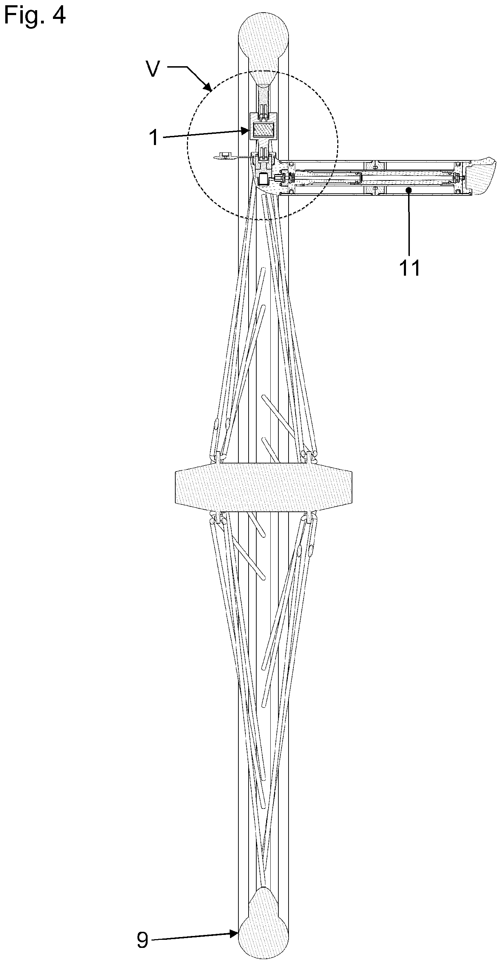

Alternativ oder zusätzlich zu Luftdrucksensoren, die unmittelbar oder mittelbar mit Luftpumpen verbunden sind, kann auch ein Luftdrucksensor in das Ventil des Reifens integriert oder mit dem Ventil des Reifens verbunden sein. Insbesondere kann eine in den Fig. 1 bis Fig. 5 beispielhaft abgebildete Vorrichtung vorgesehen sein, die drahtlos Informationen über den Luftdruck an das mobiles Endgerät übertragen kann.

Dadurch kann auch während der Fahrt der Luftdruck überwacht werden. Wenn die App während der Fahrt einen langsamen Luftverlust ermittelt, der die Gefahr eines platten Reifens wahrscheinlich erscheinen lässt, signalisiert sie dies dem Benutzer und/oder zeigt es auf dem Display des mobilen Endgeräts an.

Die App kann dem Benutzer bei erkannten Luftverlust mitteilen, dass eine Druckluftkartusche mitgeführt wird, deren Luftvorrat ausreicht, um die fehlende Luft zu ersetzen.

## Patentansprüche

1. Verfahren zur Kontrolle des Drucks eines Zweiradreifens, insbesondere eines Fahrradreifens, umfassend folgende Verfahrensschritte:
- Der Istdruck des Zweiradreifens wird ermittelt,
- ein Solldruck des Zweiradreifens wird ermittelt,
- der Istdruck wird mit dem Solldruck verglichen,
- der Istdruck und/oder der Solldruck und/oder die Differenz zwischen Solldruck und Istdruck des Zweiradreifens werden angezeigt oder signalisiert,
**dadurch gekennzeichnet, dass** aus einer Datenbank Informationen entnommen werden, die dem Solldruck entsprechen oder eine Ermittlung des Solldrucks ermöglichen, und/oder dass von dem Benutzer zur Verfügung gestellte Informationen für die Ermittlung des Solldrucks verwendet werden, wobei die von dem Benutzer zur Verfügung gestellten Informationen das Gewicht zusätzlicher Lasten und/oder das Streckenprofil der zu bewältigenden Strecke betreffen.

2. Verfahren nach Anspruch 1, **dadurch gekennzeichnet, dass** der Solldruck aus den von dem Benutzer zur Verfügung gestellten Informationen und/oder den aus der Datenbank entnommenen Information ermittelt, insbesondere berechnet wird.

3. Verfahren nach einem der Ansprüche 1 oder 2, **dadurch gekennzeichnet, dass** der Istdruck von Sensormitteln ermittelt wird, die insbesondere mit dem Ventil des Zweiradreifens oder mit einer Pumpe zum Aufpumpen des Zweiradreifens verbunden sind oder in das Ventil des Zweiradreifens oder in die Pumpe zum Aufpumpen des Zweiradreifens integriert sind, wobei vorzugsweise eine Vorrichtung für das Messen des Drucks eines Zweiradreifens, insbesondere eines Fahrradreifens (9), verwendet wird, die Verbindungsmittel für die Verbindung der Vorrichtung (1) mit dem Ventil (3) des Zweiradreifens, Mittel zum Öffnen des Ventils (3), so dass im mit dem Ventil (3) verbundenen Zustand aus dem Zweiradreifen durch das Ventil (3) unter Druck stehende Luft in die Vorrichtung (1) hineinströmt, bis der Druck in der Vorrichtung (1) dem Druck in dem Zweiradreifen entspricht, Druckmessmittel für die Messung des Drucks in der Vorrichtung (1), sowie Übertragungsmittel für die drahtlose Übertragung der dem gemessenen Druck entsprechenden Information umfasst.

4. Verfahren nach einem der Ansprüche 1 bis 3, **dadurch gekennzeichnet, dass** während eines Aufpumpvorgangs und/oder während einer Fahrt der Solldruck und/oder der Istdruck und/oder die Differenz zwischen Solldruck und Istdruck des Zweiradreifens signalisiert oder angezeigt werden, insbesondere auf einem Display angezeigt werden.

5. Verfahren nach einem der Ansprüche 1 bis 4, **dadurch gekennzeichnet, dass** das Verfahren als Computerprogramm, insbesondere als Anwendungssoftware (App), auf einem mobilen Endgerät wie einem Smartphone oder einem Tabletcomputer durchgeführt werden kann.

6. Rechenvorrichtung, insbesondere mobiles Endgerät wie Smartphone oder Tabletcomputer, die dazu eingerichtet ist, ein Verfahren nach einem der Ansprüche 1 bis 5 durchzuführen.

7. Computerprogramm, das eine Rechenvorrichtung, insbesondere ein mobiles Endgerät wie ein Smartphone oder einen Tabletcomputer, veranlasst, die Schritte eines Verfahrens nach einem der Ansprüche 1 bis 5 durchzuführen, wenn es auf der Rechenvorrichtung ausgeführt wird.

8. Maschinenlesbares Speichermedium mit einem darauf gespeicherten Computerprogramm nach Anspruch 7.

## Claims

1. Method for controlling the pressure of a two-wheeled vehicle tire, in particular of a bicycle tire, comprising following method steps:
- the actual pressure of the two-wheeled vehicle tire is determined,
- a target pressure of the two-wheeled vehicle tire is determined,
- the actual pressure is compared with the target pressure,
- the actual pressure and/or the target pressure or the difference between target pressure and actual pressure of the two-wheeled vehicle tire are displayed or signalled,
**characterised in that** information which corresponds to the target pressure or allows a determination of the target pressure is taken from a database, and/or that information made available by the user is used for the determination of the target pressure, wherein the information made available by the user concerns the weight of additional loads and/or the route profile of the route to be traversed.

2. Method according to claim 1, **characterised in that** the target pressure is determined, in particular calculated from the information made available by the user and/or the information taken from the database.

3. Method according to any of claims 1 or 2, **characterised in that** the actual pressure is detected by sensor means which are in particular connected with the valve of the two-wheeled vehicle tire or with a pump for pumping-up the two-wheeled vehicle tire or are integrated into the valve of the two-wheeled vehicle tire or into the pump for the pumping-up of the two-wheeled vehicle tire, wherein preferably a device for the measuring of the pressure of a two-wheeled vehicle tire, in particular of a bicycle tire (9), is used, which comprises connecting means for the connecting of the device (1) with the valve (3) of the two-wheeled vehicle tire, means for opening the valve (3) such that in a condition connected with the valve (3) air being under pressure flows out of the two-wheeled vehicle tire through the valve (3) into the device (1) until the pressure in the device (1) is equal to the pressure in the two-wheeled vehicle tire, pressure measuring means for the measuring of the pressure in the device (1), and transmitting means for the wireless transmission of the information corresponding to the measured pressure.

4. Method according to any of claims 1 to 3, **characterised in that** during a pumping-up procedure and/or during a journey the target pressure and/or the actual pressure and/or the difference between target pressure and actual pressure of the two-wheeled vehicle tire are signalled or displayed, in particular are displayed on a display.

5. Method according to any of claims 1 to 4, **characterised in that** the method can be carried out as a computer programme, in particular as an application software (app), on a mobile end device such as a smartphone or a tablet computer.

6. Computing device, in particular mobile end device such as a smartphone or tablet computer, which is configured to carry out a method according to any of claims 1 to 5.

7. Computer programme which allows a computing device, in particular a mobile end device such as a smartphone or a tablet computer, to carry out the steps of a method according to any of claims 1 to 5, when it is run on the computing device.

8. Machine-readable storage medium having a computer programme according to claim 7 stored thereon.

## Revendications

1. Procédé de contrôle de la pression d'un pneu de deux-roues, en particulier d'un pneu de bicyclette, comprenant les étapes de procédé suivantes :
- on détermine la pression réelle du pneu de deux-roues,
- on détermine une pression de consigne du pneu de deux-roues,
- on compare la pression réelle à la pression de consigne,
- on affiche ou signale la pression réelle et/ou la pression de consigne et/ou la différence entre pression réelle et pression de consigne du pneu de deux-roues,
**caractérisé en ce que** l'on extrait d'une base de données des informations qui correspondent à la pression de consigne ou qui permettent une détermination de la pression de consigne et/ou **en ce que** l'on utilise des informations fournies par l'utilisateur afin de déterminer la pression de consigne, lesquelles informations fournies par l'utilisateur concernent le poids de charges supplémentaires et/ou le profil de parcours du parcours à surmonter.

2. Procédé selon la revendication 1, **caractérisé en ce que** l'on détermine, en particulier on calcule, la pression de consigne à partir des informations fournies par l'utilisateur et/ou à partir de l'information extraite de la base de données.

3. Procédé selon l'une quelconque des revendications 1 ou 2,
**caractérisé en ce que** l'on détermine la pression réelle par des moyens capteurs qui sont reliés en particulier à la valve du pneu de deux-roues ou à une pompe destinée à gonfler le pneu de deux-roues ou qui sont intégrés dans la valve du pneu de deux-roues ou dans la pompe destinée à gonfler le pneu de deux-roues,
dans lequel on utilise de préférence un dispositif qui est destiné à la mesure de la pression d'un pneu de deux-roues, en particulier d'un pneu de bicyclette (9), et qui comprend des moyens de liaison destinés à relier le dispositif (1) à la valve (3) du pneu de deux-roues, des moyens destinés à ouvrir la valve (3) de telle sorte que, dans l'état relié à la valve (3), de l'air sous pression passe du pneu de deux-roues via la valve (3) dans le dispositif (1) jusqu'à ce que la pression dans le dispositif (1) corresponde à la pression dans le pneu de deux-roues, des moyens de mesure de pression destinés à mesurer la pression dans le dispositif (1) ainsi que des moyens de transmission destinés à transmettre sans fil l'information correspondant à la pression mesurée.

4. Procédé selon l'une quelconque des revendications 1 à 3, **caractérisé en ce que**, pendant une opération de gonflage et/ou pendant un trajet, on signale ou affiche, en particulier on affiche sur un écran, la pression de consigne et/ou la pression réelle et/ou la différence entre pression de consigne et pression réelle du pneu de deux-roues.

5. Procédé selon l'une quelconque des revendications 1 à 4, **caractérisé en ce que** le procédé peut être mis en oeuvre sous forme de programme informatique, en particulier sous forme de logiciel d'application (App), sur un terminal mobile tel qu'un smartphone ou une tablette.

6. Dispositif informatique, en particulier terminal mobile tel qu'un smartphone ou une tablette, qui est conçu pour mettre en oeuvre un procédé selon l'une quelconque des revendications 1 à 5.

7. Programme informatique, qui fait en sorte qu'un dispositif informatique, en particulier un terminal mobile tel qu'un smartphone ou une tablette, mette en oeuvre les étapes d'un procédé selon l'une quelconque des revendications 1 à 5 lorsqu'il est exécuté sur le dispositif informatique.

8. Support de mémoire lisible par ordinateur avec un programme informatique selon la revendication 7 mémorisé dessus.
